# FASCICULE DE BREVET EUROPEEN

(11) **EP 2 744 041 B1**
(45) Date de publication et mention de la délivrance du brevet: **22.11.2023**
(21) Numéro de dépôt: 13196687.1
(22) Date de dépôt: 11.12.2013
(51) Int. Cl.: H01Q 1/28, H01Q 1/42, H01Q 1/50, B64D 45/02

(54) **Système de protection parafoudre pour radôme et procédé de montage associé**
Blitzschutzsystem für Antennenkuppel, und entsprechendes Montageverfahren
Lightning protection system for radome and related installation method

(30) Priorité: 14.12.2012 FR 1262065
(43) Date de publication de la demande: 18.06.2014
(73) Titulaire: Airbus Opérations SAS, 31060 Toulouse (FR)
(72) Inventeur: Jeanneau, Charlotte, 31530 LEVIGNAC (FR); Bernus, Christophe, 31000 TOULOUSE (FR); Dupas, Thony, 31100 TOULOUSE (FR)
(74) Mandataire: Cabinet Le Guen Maillet

(56) Documents cités:
- FR-A1- 2 727 784
- FR-A1- 2 924 686
- FR-A1- 2 970 569
- US-A- 3 576 581
- US-A- 4 796 153

## Description

### Domaine technique et art antérieur

L'invention concerne un système de protection parafoudre pour radôme ainsi qu'un procédé de montage de système de protection parafoudre sur un radôme.

L'invention trouve une application particulièrement avantageuse pour les radômes d'aéronef.

La foudre peut produire d'importants dommages aux aéronefs en vol. Afin de protéger les aéronefs et de minimiser les dégâts pouvant être occasionnés par la foudre, il est connu de placer des bandes de protection parafoudre sur le radôme des aéronefs.

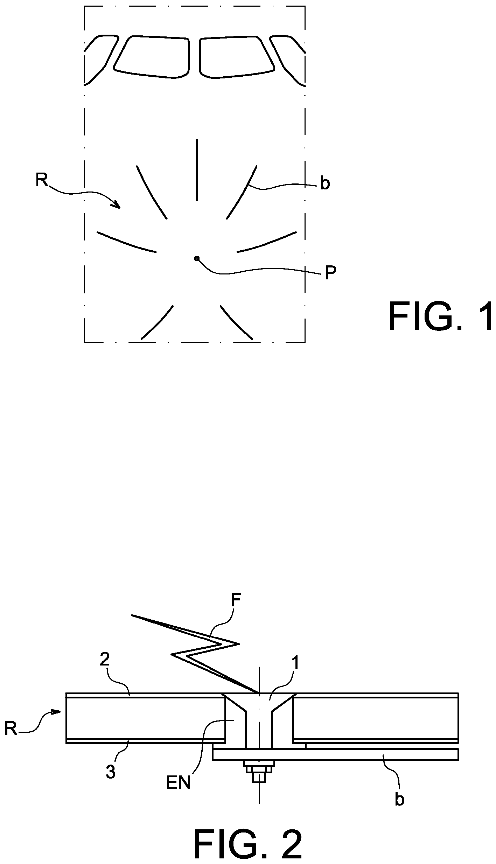

Un premier système de protection parafoudre connu est constitué de bandes métalliques positionnées sur la face externe du radôme. La figure 1 illustre ce dispositif. Afin de minimiser les problèmes d'aérodynamisme, les bandes métalliques b sont disposées de façon radiale sur la face externe du radôme, partant de la périphérie du radôme et visant la pointe P de celui-ci. Les bandes métalliques sont électriquement reliées à la masse de l'aéronef. Lorsque la foudre frappe le radôme, les bandes métalliques b guident la foudre jusqu'à la masse de l'aéronef.

Afin de supprimer le problème d'aérodynamisme, il est connu de l'art antérieur un système dans lequel les bandes métalliques sont positionnées à l'intérieur du radôme, l'attachement de la foudre sur le radôme s'opérant alors à l'aide de plots métalliques qui affleurent la paroi externe du radôme. Un tel système est décrit dans la demande de brevet d'invention déposée par la Demanderesse, en date du 11 Décembre 2007, sous le N°07 59733, publié sous le numéro de publication FR 2 924 686 A1, et intitulé « Système parafoudre et aéronef comportant un tel système ». Par souci de symétrie et de raccordement des bandes métalliques au fuselage de l'aéronef, celles-ci sont disposées de façon radiale sur la face interne du radôme. La figure 2 illustre la liaison entre un plot métallique 1 qui affleure la paroi externe du radôme et une bande de protection parafoudre b située sur la face interne du radôme. Le plot métallique 1 est fixé dans la paroi du radôme R via une entretoise EN et la bande métallique b est vissée au plot métallique 1. La foudre F qui frappe le plot métallique 1 du côté de la paroi externe 2 du radôme est alors guidée jusqu'à la bande b située du côté de la paroi interne 3 du radôme.

Si ce deuxième dispositif permet de résoudre le problème d'aérodynamisme, la position des bandes métalliques continue de perturber le rayonnement qui est émis par l'antenne. En effet, du fait de la présence des bandes métalliques b disposées radialement sur la face interne du radôme, l'énergie totale émise au loin est inférieure à l'énergie totale qui serait émise en l'absence de bandes. De même, le diagramme de rayonnement est également perturbé par rapport au diagramme qui serait obtenu en l'absence de bandes.

L'invention ne présente pas les inconvénients mentionnés ci-dessus.

### Exposé de l'invention

En effet, l'invention concerne un dispositif comprenant un radôme, une antenne et un système de protection parafoudre selon la revendication 1.

Dans le cadre de l'invention, l'expression « sensiblement perpendiculaire » doit s'entendre, par exemple, comme perpendiculaire à plus ou moins 25°.

Selon une caractéristique supplémentaire de l'invention, la courbe définie par chacune desdites au moins une bande de protection parafoudre est sensiblement perpendiculaire à un ensemble de segments, chaque segment de l'ensemble de segments correspondant, pour un dépointage de l'antenne , à une projection, sur la paroi interne du radôme, selon une direction perpendiculaire à un plan qui contient l'antenne, d'un segment de droite centré sur un élément rectiligne rayonnant central de l'antenne et ayant une direction parallèle à la direction de polarisation prédéterminée du vecteur champ électrique susceptible d'être rayonné par ledit élément rectiligne rayonnant central, la détermination de l'ensemble de segments étant effectuée pour une pluralité de dépointages de l'antenne.

Selon une autre caractéristique supplémentaire de l'invention, la courbe définie par chacune desdites au moins une bande de protection parafoudre est sensiblement perpendiculaire à au moins un segment supplémentaire qui est une prolongation, vers la périphérie du radôme et jusqu'à un point situé à proximité d'un contour qui délimite une zone d'éclairement du radôme, d'un segment projeté qui correspond à une mise en butée de l'antenne, la prolongation dudit segment correspondant à une intersection entre la paroi interne du radôme et un plan qui comprend le segment de droite centré sur ledit élément rectiligne et ledit segment projeté.

Selon encore une autre caractéristique supplémentaire de l'invention, chacune desdites au moins une bande de protection parafoudre est reliée à une masse électrique située au-delà du contour qui délimite la zone d'éclairement du radôme.

Selon encore une autre caractéristique supplémentaire de l'invention, la pluralité de dépointages de l'antenne embrasse la totalité de la fenêtre radioélectrique de l'antenne.

L'invention concerne également un aéronef comprenant un dispositif comportant un radôme et une antenne apte à rayonner en direction d'une paroi interne du radôme un champ électrique ayant une direction de polarisation rectiligne prédéterminée, le dispositif est un dispositif conforme à l'invention.

L'invention concerne également un procédé de montage de système de protection parafoudre sur une paroi interne d'un radôme selon la revendication 7.

Selon une caractéristique supplémentaire du procédé de l'invention :
- une détermination d'un ensemble de segments est effectuée, chaque segment de l'ensemble de segments étant déterminé, pour un dépointage de l'antenne, par une projection, sur la paroi interne du radôme, selon une direction perpendiculaire à un plan qui contient l'antenne, d'un segment de droite centré sur un élément rectiligne rayonnant central de l'antenne et ayant une direction parallèle à la direction de polarisation rectiligne prédéterminée du vecteur champ électrique susceptible d'être rayonné par ledit élément rectiligne rayonnant central , la détermination de l'ensemble de segments étant effectuée pour une pluralité de dépointages de l'antenne, et
- chacune desdites au moins une bande de protection parafoudre est disposée sur la paroi interne du radôme de façon que les segments interceptés par ladite bande le soient sensiblement perpendiculairement.

Selon une caractéristique supplémentaire du procédé de l'invention :
- la détermination de l'ensemble de segments comprend, en outre, pour les dépointages qui mettent l'antenne en butée, une prolongation du segment projeté vers la périphérie du radôme jusqu'à un point situé à proximité d'un contour qui délimite une zone d'éclairement du radôme, la prolongation du segment correspondant à une intersection entre la paroi interne du radôme et un plan qui comprend le segment de droite centré sur l'élément rectiligne et le segment projeté, et
- chacune desdites au moins une bande de protection parafoudre est prolongée sur la paroi interne du radôme de façon qu'un segment projeté qui résulte de la prolongation soit intercepté sensiblement perpendiculairement par ladite bande.

### Brève description des figures

D'autres caractéristiques et avantages de l'invention apparaîtront à la lecture d'un mode de réalisation préférentiel fait en référence aux figures jointes, parmi lesquelles :
- La figure 1, déjà décrite, représente un premier système de protection parafoudre selon l'art antérieur ;
- La figure 2, déjà décrite, représente une vue de détail d'un deuxième système de protection parafoudre selon l'art antérieur ;
- La figures 3 représente, à titre d'exemple non limitatif, une vue de face de la paroi interne d'un radôme équipé d'un système de protection parafoudre selon l'invention;
- Les figures 4A-4B, 5A-5B et 6A-6B illustrent, de façon symbolique, trois systèmes de protection parafoudre selon l'invention qui correspondent, respectivement, à trois polarisations rectilignes différentes de l'onde électromagnétique rayonnée ;
- Les figures 7A et 7B représentent, à titre d'exemple non limitatif, des figures géométriques aptes à la mise en place du système de protection parafoudre représenté en figure 3 ;
- La figure 8 représente un panneau d'antenne radar apte à la conception des figures géométriques représentées sur les figures 7A et 7B.

Sur toutes les figures, les mêmes références désignent les mêmes éléments.

### Exposé détaillé de modes de réalisation particulier de l'invention

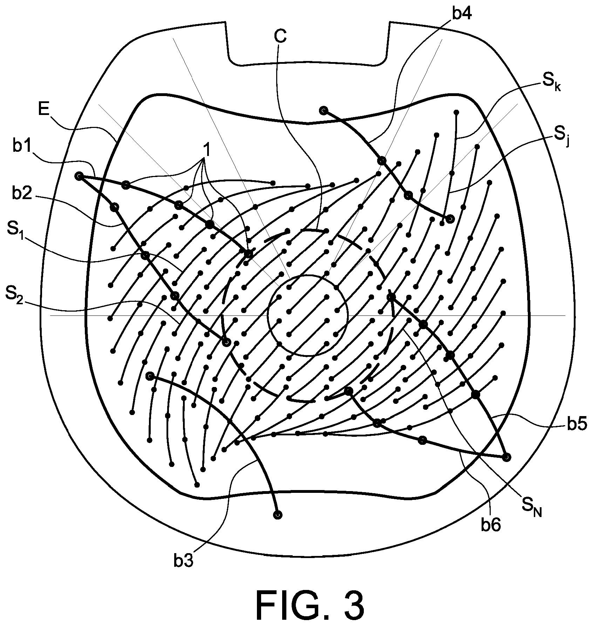

La figure 3 représente, à titre d'exemple non limitatif, une vue de face de la paroi interne d'un radôme équipé d'un système de protection parafoudre selon l'invention.

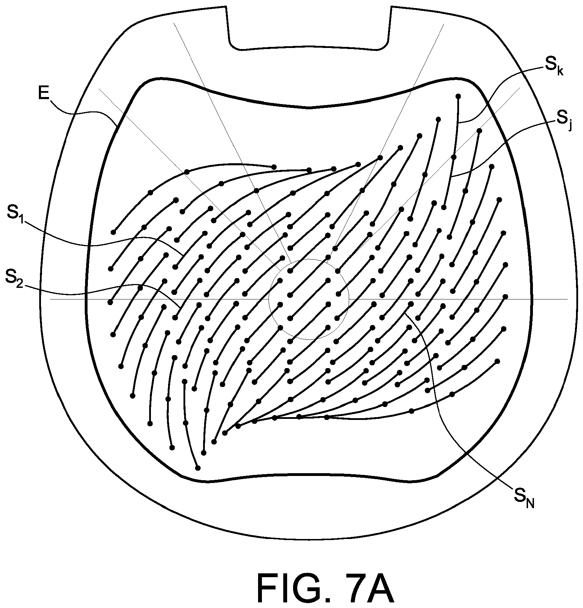

Le système de protection parafoudre selon l'invention comprend six bandes métalliques b₁-b₆ réparties sur la paroi interne du radôme. Chaque bande de protection parafoudre définit une courbe qui est sensiblement perpendiculaire, en chacun de ses points, à la direction de polarisation rectiligne du vecteur champ électrique rayonné par une antenne qui fait face au radôme. Selon l'exemple choisi, l'antenne qui fait face au radôme (non représentée sur la figure) est une antenne plate qui rayonne une onde électromagnétique dont le champ électrique est polarisé rectilignement à 45°. La direction de polarisation du vecteur champ électrique rayonné par l'antenne est représentée, de façon symbolique, par les segments S₁, S₂, ..., Sⱼ, ..., S_{N} dont la construction est détaillée en référence aux figures 7A-7B de la présente description.

Chaque bande de protection parafoudre est reliée à l'extérieur du radôme par un ensemble de plots métalliques 1 tels que décrits précédemment en référence à la figure 2. La zone d'éclairement de la paroi interne du radôme est délimitée par la courbe fermée E. Au-delà de la courbe E, chaque bande de protection parafoudre est reliée à la masse de l'aéronef. De façon connue en soi également, la partie la plus centrée du radôme est dépourvue de bande de protection parafoudre (zone du radôme à l'intérieur du cercle C représenté sur la figure 3).

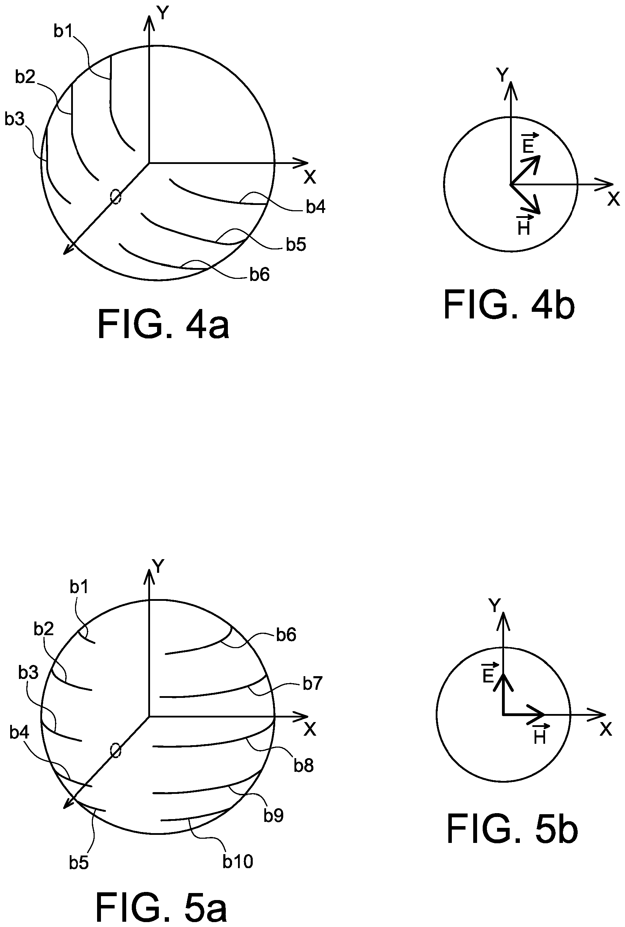

Les figures 4A-4B, 5A-5B et 6A-6B illustrent, de façon symbolique, trois systèmes de protection parafoudre de l'invention qui correspondent, respectivement, à trois polarisations rectilignes différentes de l'onde électromagnétique rayonnée.

Les figures 4A-4B illustrent, de façon symbolique, le cas représenté en détail par la figure 3 et qui correspond à une onde rayonnée polarisée à 45°. La figure 4A illustre la position de bandes de protection parafoudre sur la paroi interne du radôme et la figure 4B illustre la configuration du champ électromagnétique correspondant rayonnée par l'antenne.

Les figures 5A-5B illustrent, de façon symbolique, le cas d'une onde rayonnée polarisée verticalement. La figure 5A illustre la position de bandes de protection parafoudre sur la paroi interne du radôme et la figure 5B illustre la configuration du champ électromagnétique correspondant rayonnée par l'antenne.

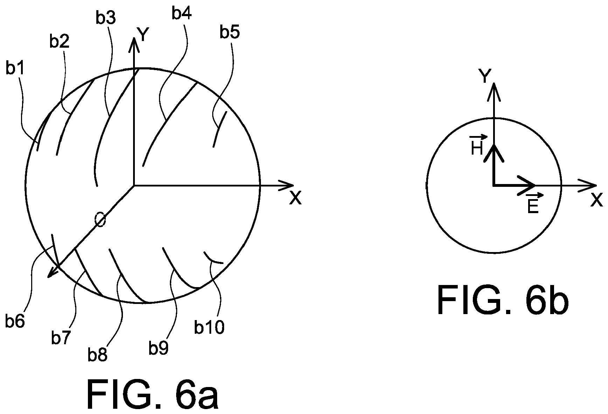

Les figures 6A-6B illustrent, de façon symbolique, le cas d'une onde rayonnée polarisée horizontalement. La figure 6A illustre la position de bandes de protection parafoudre sur la paroi interne du radôme et la figure 6B illustre la configuration du champ électromagnétique correspondant rayonnée par l'antenne.

Sur toutes les figures, il apparaît un positionnement des bandes de protection parafoudre sensiblement perpendiculaire à la direction du vecteur champ électrique rayonné.

La mise en relation, selon l'invention, de l'orientation des bandes de protection parafoudre avec la direction de polarisation rectiligne du champ électrique de l'onde rayonnée par l'antenne présente de nombreux avantages. En effet, il résulte de cette mise en relation, une très nette diminution de la perte en transparence du radôme, par exemple une diminution de l'ordre de 3%. Il est alors possible de réaliser un gain de portée et de sensibilité dans la détection des phénomènes météorologiques. Il résulte également de cette mise en relation une très nette diminution de la déformation du faisceau émis par l'antenne entraînant ainsi une baisse, par exemple de 3dB, des remontées du niveau des lobes secondaires générés par la présence du radôme. La fiabilité de la détection météorologique est ainsi améliorée en évitant, par exemple, que les éventuelles réflexions des lobes secondaires sur un nuage non situé dans l'axe de l'antenne soient prises en compte. De même, l'influence des échos de sol est diminuée, ce qui améliore la qualité du signal reçu et diminue les probabilités de fausse alerte sur le système de détection de cisaillement de vent ou système PWS (PWS pour « Prédictive WindShear). Egalement, la déviation d'axe du faisceau est diminuée, favorisant ainsi la précision des systèmes de cartographie ou de suivi de cibles.

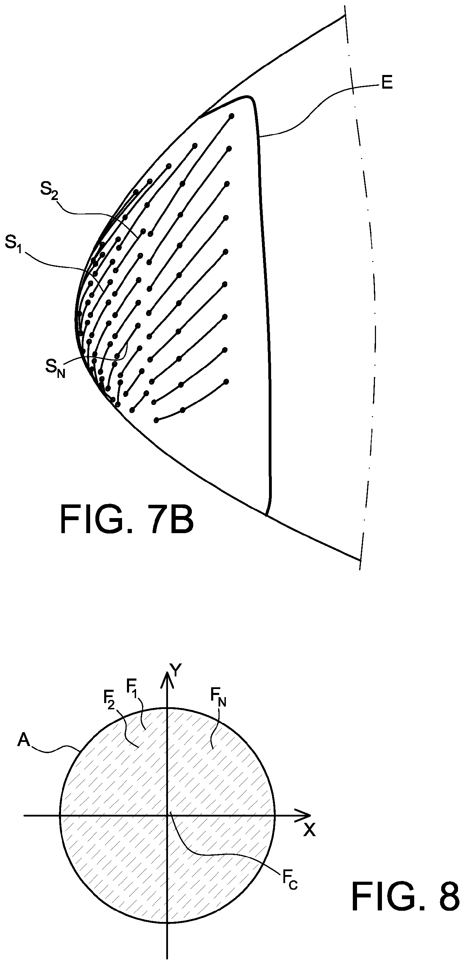

Les figures 7A et 7B représentent respectivement, à titre d'exemple non limitatif, une vue de face et une vue en coupe transversale de la paroi interne d'un radôme sur laquelle est représentée une figure géométrique apte à aider au positionnement des bandes de protection parafoudre selon l'exemple représenté en figure 3.

L'onde électromagnétique rayonnée en direction du radôme est une onde dont le champ électrique est polarisé rectilignement à 45°. La figure 8 illustre la vue de face d'un panneau d'antenne radar qui rayonne une telle onde. La surface de l'antenne définit un cercle centré dans un repère orthogonal (X, Y), les axes X et Y se confondant respectivement avec une horizontale et avec une verticale lorsque l'aéronef est au sol. L'antenne est apte à se mouvoir autour de chacun des axes X et Y (rotation en azimut autour de l'axe Y et rotation en élévation autour de l'axe Y). L'antenne est munie d'un ensemble de fentes F₁, F₂, ..., F_{N} etc. orientées à 45° dans le repère (X, Y). Parmi ces fentes, une fente centrale F_{C} passe par le centre du cercle défini par le panneau. La polarisation du champ électrique rayonné est rectiligne. Chaque fente rayonne une onde électromagnétique dont le champ électrique a une direction perpendiculaire à l'axe de la fente.

La figure géométrique de la figure 7A représente une vue de face d'un ensemble de segments Sᵢ (i=1, 2, ..., N) répartis sur la paroi interne du radôme. Ces segments sont inscrits dans la courbe fermée E qui délimite la zone d'éclairement de la paroi interne du radôme pour tous les dépointages possibles de l'antenne.

Pour un dépointage d'antenne donné, un segment Sᵢ correspond à une projection, sur la paroi interne du radôme et selon une direction perpendiculaire à un plan qui contient la surface de l'antenne, d'un segment de droite centré sur l'élément rectiligne central F_{C} et ayant une direction parallèle à la direction de polarisation du vecteur champ électrique rayonné par ledit élément rectiligne rayonnant central. Pour une antenne de diamètre égal à 70cm, la longueur du segment de droite centré sur l'élément rectiligne central est choisie, par exemple, égale à 15cm. D'autres valeurs sont toutefois possibles, par exemple 10cm ou 20cm. La projection du segment de droite centré sur l'élément rectiligne central est effectuée pour une pluralité de dépointages de l'antenne incluant le dépointage nul (projection dans l'axe de l'antenne) et les dépointages qui mettent l'antenne en butée. De façon préférentielle, la pluralité de dépointages de l'antenne embrasse la totalité de la fenêtre radioélectrique de l'antenne.

Selon l'invention, les segments projetés qui correspondent aux cas où l'antenne est en butée sont prolongés vers la périphérie du radôme. La prolongation du segment projeté correspond alors à l'intersection entre la paroi interne du radôme et un plan qui comprend le segment de droite centré sur l'élément rectiligne et le segment projeté. En référence à la figure 7A, le segment projeté Sₖ prolonge ainsi le segment projeté Sⱼ.

Une fois établie la géométrie des segments Sᵢ, le montage d'une bande métallique sur la face interne du radôme s'effectue en joignant des points de tracé choisis de façon que la courbe dessinée par ces points soit sensiblement perpendiculaire aux segments qu'elle intercepte. La distance qui sépare deux points de tracé successifs est, par exemple, égale à 20cm en distance curviligne. Un certain nombre de points de passage entre extérieur et intérieur du radôme sont également tracés pour le passage des vis destinées à fixer la bande métallique. La bande métallique peut soit être rigide (et donc avoir été préalablement mise à la bonne forme), soit être souple pour mieux se conformer à la forme souhaitée.

Dans la description qui précède, l'invention a été plus particulièrement décrite pour une application de radôme embarqué dans un aéronef. De façon plus générale cependant, l'invention s'applique à tout type de radôme associé à une antenne, embarqué ou non.

## Revendications

1. Dispositif comprenant un radôme (R) et une antenne (A), l'antenne étant munie de fentes, chaque fente apte à rayonner en direction d'une paroi interne du radôme un champ électrique ayant une direction de polarisation rectiligne prédéterminée, le radôme étant muni d'un système de protection parafoudre, **caractérisé en ce que** le système de protection parafoudre comprend au moins une bande de protection parafoudre positionnée sur une paroi interne du radôme, chacune desdites au moins une bande de protection parafoudre définissant, sur la paroi interne du radôme, une courbe qui est sensiblement perpendiculaire, en chacun de ses points, à la direction de polarisation rectiligne prédéterminée du vecteur champ électrique.

2. Dispositif selon la revendication 1, dans lequel la courbe définie par chacune desdites au moins une bande de protection parafoudre est sensiblement perpendiculaire à un ensemble de segments (S1, S2, ..., SN), chaque segment de l'ensemble de segments correspondant, pour un dépointage de l'antenne, à une projection, sur la paroi interne du radôme, selon une direction perpendiculaire à un plan qui contient l'antenne, d'un segment de droite centré sur un élément rectiligne rayonnant central (FC) de l'antenne et ayant une direction parallèle à la direction de polarisation prédéterminée du vecteur champ électrique susceptible d'être rayonné par ledit élément rectiligne rayonnant central, la détermination de l'ensemble de segments étant effectuée pour une pluralité de dépointages de l'antenne.

3. Dispositif selon la revendication 2, dans lequel la courbe définie par chacune desdites au moins une bande de protection parafoudre est sensiblement perpendiculaire à au moins un segment supplémentaire qui est une prolongation, vers une périphérie du radôme et jusqu'à un point situé à proximité d'un contour (E) qui délimite une zone d'éclairement du radôme, d'un segment projeté qui correspond à une mise en butée de l'antenne, la prolongation dudit segment correspondant à une intersection entre la paroi interne du radôme et un plan qui comprend le segment de droite centré sur ledit élément rectiligne et ledit segment projeté.

4. Dispositif selon la revendication 3, dans lequel chacune desdites au moins une bande de protection parafoudre (b1 ,b2,...bn) est reliée à une masse électrique située au-delà du contour (E) qui délimite la zone d'éclairement du radôme.

5. Dispositif selon l'un quelconque des revendications 2 à 4, dans lequel la pluralité de dépointages de l'antenne embrasse la totalité de la fenêtre radioélectrique de l'antenne.

6. Aéronef comprenant un dispositif comportant un radôme (R) et une antenne (A) apte à rayonner en direction d'une paroi interne du radôme un champ électrique ayant une direction de polarisation rectiligne prédéterminée, **caractérisé en ce que** le dispositif est un dispositif selon l'une quelconque des revendication 1 à 5.

7. Procédé de montage de système de protection parafoudre sur une paroi interne d'un radôme d'antenne, l'antenne étant apte à rayonner en direction de la paroi interne du radôme un champ électrique ayant une direction de polarisation rectiligne prédéterminée, le procédé comprenant le montage d'au moins une bande de protection parafoudre sur la paroi interne du radôme, **caractérisé en ce que** le montage de chacune desdites au moins une bande de protection parafoudre est effectué de sorte que la bande de protection parafoudre suive une courbe sensiblement perpendiculaire, en chacun de ses points, à la direction de polarisation rectiligne prédéterminée du vecteur champ électrique.

8. Procédé de montage selon la revendication 7, dans lequel est effectuée une détermination d'un ensemble de segments (S1, S2, ..., SN), chaque segment de l'ensemble de segments étant déterminé, pour un dépointage de l'antenne, par une projection sur la paroi interne du radôme, selon une direction perpendiculaire à un plan qui contient l'antenne, d'un segment de droite centré sur un élément rectiligne rayonnant central (FC) de l'antenne et ayant une direction parallèle à la direction de polarisation rectiligne prédéterminée du vecteur champ électrique susceptible d'être rayonné par ledit élément rectiligne rayonnant central, la détermination de l'ensemble de segments étant effectuée pour une pluralité de dépointages de l'antenne, chacune desdites au moins une bande de protection parafoudre étant disposée sur la paroi interne du radôme de façon que les segments interceptés par ladite bande le soient sensiblement perpendiculairement.

9. Procédé de montage selon la revendication 8, dans lequel la détermination de l'ensemble de segments comprend, en outre, pour les dépointages qui mettent l'antenne en butée, une prolongation du segment projeté vers la périphérie du radôme jusqu'à un point situé à proximité d'un contour (E) qui délimite une zone d'éclairement du radôme, la prolongation du segment correspondant à une intersection entre la paroi interne du radôme et un plan qui comprend le segment de droite centré sur l'élément rectiligne et le segment projeté, chacune desdites au moins une bande de protection parafoudre étant prolongée sur la paroi interne du radôme de façon qu'un segment projeté qui résulte de la prolongation soit intercepté sensiblement perpendiculairement par ladite bande (b1 ,b2,...bn).

10. Procédé selon la revendication 9, dans lequel chacune desdites au moins une tebande de protection parafoudre (b1 ,b2,...bn) est reliée à une masse électrique située au-delà du contour (E) qui délimite la zone d'éclairement du radôme.

11. Procédé selon l'une quelconque des revendications 8 à 10, dans lequel la pluralité de dépointages de l'antenne embrasse la totalité de la fenêtre radioélectrique de l'antenne.

## Patentansprüche

1. Vorrichtung, die ein Radom (R) und eine Antenne (A) beinhaltet, wobei die Antenne über Schlitze verfügt, wobei jeder Schlitz dazu fähig ist, ein elektrisches Feld mit einer vorbestimmten linearen Polarisationsrichtung in Richtung einer Innenwand des Radoms auszustrahlen, wobei das Radom über ein Blitzschutzsystem verfügt, **dadurch gekennzeichnet, dass** das Blitzschutzsystem mindestens ein Blitzschutzband beinhaltet, das auf einer Innenwand des Radoms positioniert ist, wobei jedes des mindestens einen Blitzschutzbandes auf der Innenwand des Radoms eine Kurve definiert, die an jedem ihrer Punkte zu der vorbestimmten linearen Polarisationsrichtung des elektrisches Feldvektors im Wesentlichen senkrecht ist.

2. Vorrichtung nach Anspruch 1, wobei die Kurve, die durch jedes des mindestens einen Blitzschutzbandes definiert wird, zu einem Satz von Segmenten (S1, S2, ..., SN) im Wesentlichen senkrecht ist, wobei jedes Segment des Satzes von Segmenten für eine Ablenkung der Antenne Folgendem entspricht: einer Projektion, auf die Innenwand des Radoms, gemäß einer zu einer Ebene, die die Antenne enthält, senkrechten Richtung, eines Geradensegments, das auf ein zentrales geradliniges Strahlungselement (FC) der Antenne zentriert ist und eine zu der vorbestimmten Polarisationsrichtung des elektrischen Feldvektors, der durch das zentrale geradlinige Strahlungselement ausgestrahlt werden kann, parallele Richtung aufweist, wobei die Bestimmung des Satzes von Segmenten für eine Vielzahl von Ablenkungen der Antenne erfolgt.

3. Vorrichtung nach Anspruch 2, wobei die Kurve, die durch jedes des mindestens einen Blitzschutzbandes definiert wird, zu mindestens einem Zusatzsegment im Wesentlichen senkrecht ist, welches eine Verlängerung, hin zu einer Peripherie des Radoms und bis zu einem Punkt, der sich in der Nähe einer Kontur (E), die einen Strahlungsbereich des Radoms begrenzt, befindet, eines projizierten Segments ist, das einem In-Anschlag-Bringen der Antenne entspricht, wobei die Verlängerung des Segments einer Schnittstelle zwischen der Innenwand des Radoms und einer Ebene, die das auf das geradlinige Element zentrierte Geradensegment und das projizierte Segment beinhaltet, entspricht.

4. Vorrichtung nach Anspruch 3, wobei jedes des mindestens einen Blitzschutzbandes (b1, b2, ...bn) mit einer elektrischen Masse verbunden ist, die sich jenseits der Kontur (E), die den Strahlungsbereich des Radoms begrenzt, befindet.

5. Vorrichtung nach einem beliebigen der Ansprüche 2 bis 4, wobei die Vielzahl von Ablenkungen der Antenne die Gesamtheit des Funkfensters der Antenne abdeckt.

6. Luftfahrzeug, das eine Vorrichtung beinhaltet, die ein Radom (R) und eine Antenne (A), die dazu fähig ist, ein elektrisches Feld mit einer vorbestimmten linearen Polarisationsrichtung in Richtung einer Innenwand des Radoms auszustrahlen, umfasst, **dadurch gekennzeichnet, dass** die Vorrichtung eine Vorrichtung nach einem beliebigen der Ansprüche 1 bis 5 ist.

7. Verfahren zur Montage eines Blitzschutzsystems auf einer Innenwand eines Antennenradoms, wobei die Antenne dazu fähig ist, ein elektrisches Feld mit einer vorbestimmten linearen Polarisationsrichtung in Richtung der Innenwand des Radoms auszustrahlen, wobei das Verfahren die Montage mindestens eines Blitzschutzbandes auf der Innenwand des Radoms beinhaltet, **dadurch gekennzeichnet, dass** die Montage von jedem des mindestens einen Blitzschutzbandes so erfolgt, dass das Blitzschutzband einer Kurve folgt, die an jedem ihrer Punkte zu der vorbestimmten linearen Polarisationsrichtung des elektrisches Feldvektors im Wesentlichen senkrecht ist.

8. Montageverfahren nach Anspruch 7, wobei eine Bestimmung eines Satzes von Segmenten (S1, S2, ..., SN) erfolgt, wobei jedes Segment des Satzes von Segmenten für eine Ablenkung der Antenne durch Folgendes bestimmt wird: eine Projektion, auf die Innenwand des Radoms, gemäß einer zu einer Ebene, die die Antenne enthält, senkrechten Richtung, eines Geradensegments, das auf ein zentrales geradliniges Strahlungselement (FC) der Antenne zentriert ist und eine zu der vorbestimmten linearen Polarisationsrichtung des elektrischen Feldvektors, der durch das zentrale geradlinige Strahlungselement ausgestrahlt werden kann, parallele Richtung aufweist, wobei die Bestimmung des Satzes von Segmenten für eine Vielzahl von Ablenkungen der Antenne erfolgt, wobei jedes des mindestens einen Blitzschutzbandes so auf der Innenwand des Radoms angeordnet ist, dass die Segmente, die von dem Band unterbrochen werden, im Wesentlichen senkrecht unterbrochen werden.

9. Montageverfahren nach Anspruch 8, wobei die Bestimmung des Satzes von Segmenten ferner für die Ablenkungen, die die Antenne in Anschlag bringen, eine Verlängerung des projizierten Elements hin zu der Peripherie des Radoms bis zu einem Punkt, der sich in der Nähe einer Kontur (E), die einen Strahlungsbereich des Radoms begrenzt, befindet, beinhaltet, wobei die Verlängerung des Segments einer Schnittstelle zwischen der Innenwand des Radoms und einer Ebene, die das auf das geradlinige Elemente zentrierte Geradensegment und das projizierte Element beinhaltet, entspricht, wobei jedes des mindestens einen Blitzschutzbandes so auf der Innenwand des Radoms verlängert wird, dass ein projiziertes Segment, das sich aus der Verlängerung ergibt, durch das Band (b1, b2, ...bn) im Wesentlichen senkrecht unterbrochen wird.

10. Verfahren nach Anspruch 9, wobei jedes des mindestens einen Blitzschutzbandes (b1, b2, ...bn) mit einer elektrischen Masse verbunden ist, die sich jenseits der Kontur (E), die den Strahlungsbereich des Radoms begrenzt, befindet.

11. Verfahren nach einem beliebigen der Ansprüche 8 bis 10, wobei die Vielzahl von Ablenkungen der Antenne die Gesamtheit des Funkfensters der Antenne abdeckt.

## Claims

1. Device comprising a radome (R) and an antenna (A), the antenna being provided with slots, each slot being able to radiate, in the direction of an inner wall of the radome, an electric field having a predetermined rectilinear direction of polarization, the radome being provided with a lightning protection system, **characterized in that** the lightning protection system comprises at least one lightning protection strip positioned on an inner wall of the radome, each of said at least one lightning protection strip defining, on the inner wall of the radome, a curve which is substantially perpendicular, at each of its points, to the predetermined rectilinear direction of polarization of the electric field vector.

2. Device according to Claim 1, wherein the curve defined by each of said at least one lightning protection strip is substantially perpendicular to a set of segments (S1, S2, ..., SN), each segment in the set of segments corresponding, for a misalignment of the antenna, to a projection, on the inner wall of the radome, in a direction which is perpendicular to a plane which contains the antenna, of a straight-line segment centred on a central radiating rectilinear element (FC) of the antenna and having a direction which is parallel to the predetermined direction of polarization of the electric field vector which may be radiated by said central radiating rectilinear element, the set of segments being determined for a plurality of misalignments of the antenna.

3. Device according to Claim 2, wherein the curve defined by each of said at least one lightning protection strip is substantially perpendicular to at least one additional segment which is a continuation, towards a periphery of the radome and as far as a point located in proximity to an outline (E) which delimits an illumination region of the radome, of a projected segment which corresponds to placing the antenna in abutment, the continuation of said segment corresponding to an intersection between the inner wall of the radome and a plane which comprises the straight-line segment centred on said rectilinear element and said projected segment.

4. Device according to Claim 3, wherein each of said at least one lightning protection strip (b1, b2, ..., bn) is connected to an electrical ground located beyond the outline (E) which delimits the illumination region of the radome.

5. Device according to any one of Claims 2 to 4, wherein the plurality of misalignments of the antenna encompasses the entirety of the radio window of the antenna.

6. Aircraft comprising a device comprising a radome (R) and an antenna (A) which is able to radiate, in the direction of an inner wall of the radome, an electric field having a predetermined rectilinear direction of polarization, **characterized in that** the device is a device according to any one of Claims 1 to 5.

7. Method for mounting a lightning protection system on an inner wall of an antenna radome, the antenna being able to radiate, in the direction of the inner wall of the radome, an electric field having a predetermined rectilinear direction of polarization, the method comprising mounting at least one lightning protection strip on the inner wall of the radome, **characterized in that** each of said at least one lightning protection strip is mounted so that the lightning protection strip follows a curve which is substantially perpendicular, at each of its points, to the predetermined rectilinear direction of polarization of the electric field vector.

8. Mounting method according to Claim 7, wherein a set of segments (S1, S2, ..., SN) is determined, each segment in the set of segments being determined, for a misalignment of the antenna, by a projection, on the inner wall of the radome, in a direction which is perpendicular to a plane which contains the antenna, of a straight-line segment centred on a central radiating rectilinear element (FC) of the antenna and having a direction which is parallel to the predetermined rectilinear direction of polarization of the electric field vector which may be radiated by said central radiating rectilinear element, the set of segments being determined for a plurality of misalignments of the antenna, each of said at least one lightning protection strip being arranged on the inner wall of the radome so that the segments intercepted by said strip are intercepted substantially perpendicularly.

9. Mounting method according to Claim 8, wherein determining the set of segments further comprises, for the misalignments which place the antenna in abutment, a continuation of the projected segment towards the periphery of the radome as far as a point located in proximity to an outline (E) which delimits an illumination region of the radome, the continuation of the segment corresponding to an intersection between the inner wall of the radome and a plane which comprises the straight-line segment centred on the rectilinear element and the projected segment, each of said at least one lightning protection strip being continued on the inner wall of the radome so that a projected segment which results from the continuation is intercepted substantially perpendicularly by said strip (b1, b2, ..., bn) .

10. Method according to Claim 9, wherein each of said at least one lightning protection strip (b1, b2, ..., bn) is connected to an electrical ground located beyond the outline (E) which delimits the illumination region of the radome.

11. Method according to any one of Claims 8 to 10, wherein the plurality of misalignments of the antenna encompasses the entirety of the radio window of the antenna.
